# EUROPEAN PATENT SPECIFICATION

(11) **EP 1 115 661 B1**
(45) Date of publication and mention of the grant of the patent: **18.12.2002**
(21) Application number: 99944705.5
(22) Date of filing: 08.09.1999
(51) Int. Cl.: C02F 1/28, C02F 1/52

(54) **LIQUID TREATMENT**
BEHANDLUNG VON FLÜSSIGKEIT
TRAITEMENT D'UN LIQUIDE

(30) Priority: 11.09.1998 GB 9819731
(43) Date of publication of application: 18.07.2001
(73) Proprietor: University of York, York YO10 5DD (GB)
(72) Inventor: WILSON, Ashley John, Univ. of York, YorkYO10 5YM (GB)
(74) Representative: Harrison Goddard Foote
(86) International application number: GB9902981
(87) International publication number: WO00015559

(56) References cited:
- EP-A- 0 162 783
- WO-A-92/02460
- WO-A-94/22768
- GB-A- 1 563 537
- US-A- 3 533 940
- US-A- 5 010 181

## Description

### FIELD OF THE INVENTION

This invention relates to methods of treating liquids to extract components therefrom, including the treatment of effluent from a variety of industrial/ agricultural processes. Moreover the present invention also provides for recycling extracted components.

### BACKGROUND OF THE INVENTION

A variety of bioadsorbents have been employed over the years for the treatment of wastewater (*Cooper* 1995), for example GB1563537 describes the use of particulate crustacean shells for removing heavy metals from contaminated water. The types of molecules removed are generally related to the functionalized biopolymers from which the bioadsorbent is composed. These include, cellulose, alginates, chitin, chitosan and carrageenan. 'Activated' microporous materials such as activated carbon, activated silica and molecular sieves are also used.

The major problem in using purified extracts rather than the source bio-material lies in the cost of extraction. The extraction process can increase the cost by as much as 20 times.

### STATEMENTS OF INVENTION

According to the present invention there is provided a method of treating a liquid composition to extract therefrom one or more components thereof, the method comprising contacting the liquid composition with fragmented shell, or part shell, of a crustacean, said one or more components having a binding affinity with said shell, and separating said shell from said liquid composition characterised in that the shell is not chemically pre-treated.

It is important that a container in which the adsorbent material is located allows maximum opportunity for contact of the liquid, for example waste-water, with the micro-porous adsorbent, while at the same time maintaining the residence time at a minimum in order to facilitate good flow rates. A fluidised bed design of contactor will facilitate this.

Preparation of the shell for use in the method of the invention is a multi-stage process. The whole shell is preferably cleaned free from adherent biological soft tissue. This may be achieved by high pressure hosing followed by ultrasonic cleaning for about 30 min. The whole shell is then washed with fresh water and subsequently air-dried.

The shell is then fragmented by means of a high shear shredder. Typically each fragment will have front and rear surfaces derived from the largest outer and inner surfaces of the shell from which it formed a part, interconnected by side surfaces of smaller surface area. Preferably the surface area of the largest side of each fragment is from 5 to 25 mm². Most preferably the surface area of the largest side of each fragment is about 15mm².

In one embodiment of the invention, fragmented shell is then frozen in sprayed liquid nitrogen (-196°C) by passing through a Rotary Tunnel Freezer (*Air Products*). Preferably the shell fragments are cooled to a temperature of less than -30°C, most preferably the fragments are cooled to a temperature of -75°C.

Frozen shell fragments are then passed through a high shear cryogenic mill such as an *Hozokawa Micron* 'Cryo-Grind' i.e., a liquid nitrogen cooled, UPZ stainless steel, cryogenic pin mill. After milling the powder is allowed to equilibrate with room temperature in a low RH, dry atmosphere where any condensing moisture is dried off.

In another embodiment of the invention shell fragments may be milled at ambient room temperature. Our results have shown that whilst optimal binding capacity is achieved with cryogenic milling of shell fragments, when milling is performed at ambient temperatures the shell fragments retain their chemisorption properties despite a reduction in their physiosorption properties.

Milled powder, produced either by cryogenic milling or milling at ambient temperatures, is sieved through a screen with a pore size of between 50µm. -5mm, and preferably through a screen of pore size between 300 and 700µm. Pieces larger than 700µm are re-cooled and re-milled to the correct particle size range. Smaller fragments (ie. <300µm) are retained for other applications.

Preferably, the shell powder is of uniform particle size.

Preferably, the crustacean of use in the method of the present invention is crab, prawn, langoustine or lobster, more preferably, the invention involves the use of crustacean carapace.

Reference herein to carapace is intended to include the shell body, arms, legs, claws, tail and/or any other body part of a crustacean from which soft tissue can be removed.

Preferably, the crustacean is mature so that, in the instance of using a crab or lobster, at least a part of its carapace is mineralised with calcium carbonate deposits. The shells of prawns and langoustines are primarily composed of chitin and even when they are mature the shell are not always mineralised. However, mature carapaces from any one of the selected crustacea perform the function of the present invention.

Preferably, the method of the invention may be used to extract a component or components which include one or more dyes, pesticides, herbicides, polyphenolics, humic acids, oils, the oil phase from emulsions, heavy metal residues and/or any other contaminant.

The method of the present invention also provides potential for reclamation of the pollutant and recycling of the crab shell. Binding of certain molecules to the crabshell matrix may be reversed either by altering pH or using a solvent. In the latter case it is possible to elute the bound material at high concentration. The crabshell may then be washed and re-used one further time.

According to a second aspect of the invention there is provided the use of chemically non-pretreated crustacean carapace powder for treating a liquid composition to extract therefrom one or more components.

According to a third aspect of the invention there is provided a method of reforming a recycled component or components into an industrial or agricultural product by using the method of the first aspect of the invention and further including one or more of the features hereinbefore described.

### DETAILED DESCRIPTION OF THE INVENTION

The invention will now be described by way of example only with reference to the following Figures and Table wherein:
Figure 1 illustrates an electron micrograph of a crab carapace;
Figure 2 represents an alternative view of Figure 1;
Figure 3 represents an alternative view of Figures 1 and 2; and
Table 1 represents results of various extracted components bound per gram carapace.

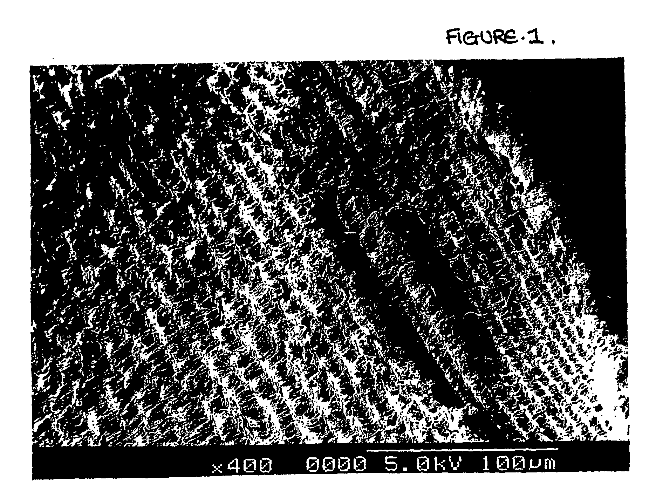

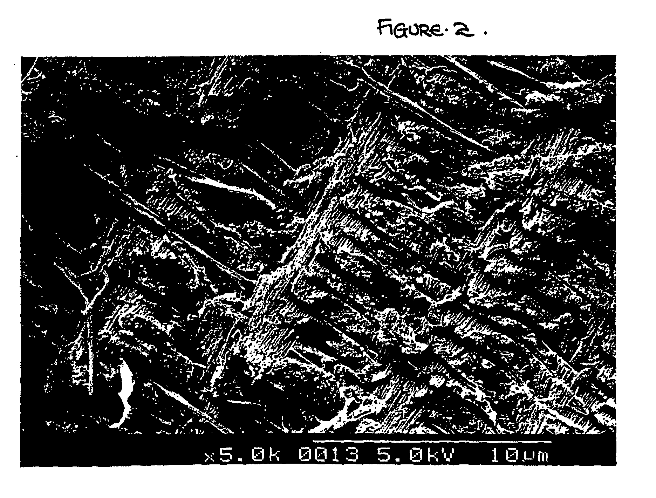

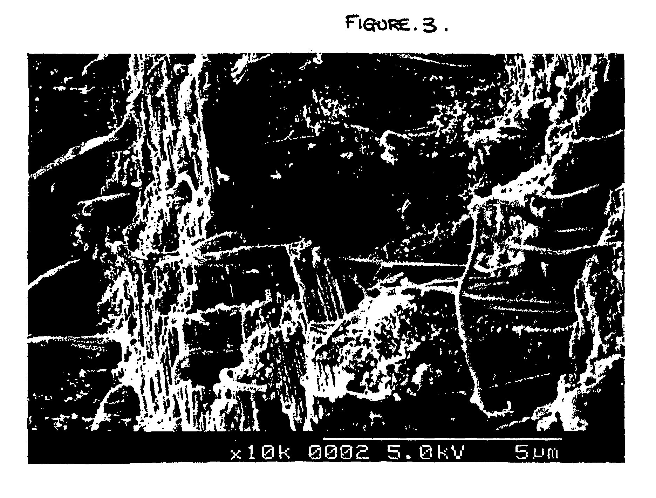

The high binding capacity of the crab carapace is partly due to the inherently microporous nature of the material (similar to activated carbon and silica) and the large surface area to volume ratio which results. The carapace has a micro-porous "box-girder" form of construction in order to provide maximum mechanical rigidity for minimum density (Figures 1 - 3). Conversion of the carapace into an adsorbent is achieved by milling into fragments, thereby providing a further increase in surface area for chemisorption and physisorption.

This patent describes the optimum particle size which will enclose pores providing a maximum flow rate while providing a retention time optimum to the provision of maximum binding.

The extensive internal surface of the carapace consists of a network of organic and inorganic components. Organic polymers (chitin and fibrous proteins) are wrapped in globular protein and cemented in inorganic calcium carbonate (*Hegdahl et al* 1977 a&b).

The positively-charged amine side-groups of the principally globular but also fibrous proteins, readily bind a variety of negatively-charged contaminating molecules found in waste-water. The retention of activity of the biochemical components bearing these functional groups however, is fundamentally dependent upon the cryogenic method used to mill the whole carapace into fragments. In addition there will be some physisorption of molecules by electrostatic, *van der Waals'* forces.

Uniform pore size is crucial to the efficiency of the adsorbent material and any technique used to reduce the whole carapace to fragments of a uniform size will result in *some* loss of protein and, by inference, activity/binding capacity. This loss is not only due to denaturation of the detachment from the skeletal matrix of the carapace. Fragmentation of the carapace by ball-milling, hammer milling and grinding involve crushing of the structure. These methods cause significant collapse of the delicate three-dimensional structure of the carapace as a result of the crushing action, but also a significant temperature rise which denatures the protein. Such deleterious processes have been shown to significantly attenuate the adsorbent activity and consequently, its binding capacity.

It has been demonstrated that cooling the carapace with liquid nitrogen (-196°C) to a temperature of about -75°C reduces certain components to below their glass transition temperature. The cooling stage is followed by fragmentation using cryogenic shear in a pin mill. This process will considerably reduce both the level of washout of protein and other active molecules and thus reduces denaturation and loss of the functional groups.

This technology provides numerous advantages over pre-existing methods of effluent treatment. It is highly cost effective since the raw material is produced annually as a waste product and actually attracts a cost for disposal in landfill sites. The subsequent processing (cryogenic milling etc.) is comparatively inexpensive.

Although the retention capacity of the adsorbent varies depending on the molecule being bound within its structure, the carapace adsorbent also has a very high binding capacity. Retention capacity may be expressed as the percentage of the weight of carapace that will bind the target molecule (Table 1). With a 100% binding capacity for example, 100g of carapace will bind 100g of the target compound. It has been estimated that for reactive, direct and disperse dyes, the binding capacity is about 5% ie., 20g of milled sieved carapace will bind 1g of dyestuff.

Disposal of the spent bioadsorbent is via landfill or incineration. When subjected to composting or when ploughed into arable land, the biochemical components of the milled carapace (protein and chitin) denature within a few weeks. Calcium carbonate, the principal mineral component, is biocompatible. Depending on the pH of the soil, it will either disappear after several months or be retained within the soil for more prolonged periods, where it will then serve as a valuable calcium fertilizer.

The method of the present invention also provides potential for reclamation of the pollutant or extracted component(s) and recycling of both the pollutant and the crab shell. Binding of certain molecules to the crabshell matrix may be reversed either by altering pH or using a solvent. In the latter case it is possible to elute the bound material at high concentration. The crabshell may then be washed and re-used one further time.

It is envisaged that the technology will have wide-ranging application to effluents produced from a variety of industrial/agricultural processes. These include colour(s) and heavy metal(s) in dyehouse/textile waste, herbicide in effluent from vegetable and fruit washing, insecticide from vegetable and fruit washing, removal of organophosphates and or pyrethroids from sheep dip prior to disposal, cleaning of potable water, removal of residual hydrophobic materials (fats) in effluent from food processing, and removal of anionic and cationic heavy metals from industrial waste-water streams.

The following examples are provided to fully illustrate the present invention and should not be construed as limitations thereof;

### EXAMPLE 1

### Dyehouse waste

Removal of colour from dye-house waste water is a major problem in the textile sector. The UK's National Rivers Authority is imposing increasingly tighter limits for colour release into water courses.

Paradoxically, the colour problem is purely aesthetic. Although most synthetic dyes are not generally considered to be toxic, they can be extremely persistent and noticeable, particularly red dyes. Textile dyes are normally designed to show good "fastness". This means they are inherently stable and thus extremely resistant to simple chemical modification resulting in decolouration.

The inherent variability of the effluent type from dye-houses in terms of quality and concentration poses a problem for traditional treatments such as flocculation or oxidation from the aspect of optimum dosage. When these technologies are employed, physically-large treatment plants are required for batch treatment of effluent. While the binding process for the novel technology described here is amenable to batch treatment, there appears to be significant advantages in using a continuous treatment stream.

With reference to Table 1 we have demonstrated that 6.6mg of specactive red reactive dye can be extracted as bound per 1g carapace and 1.7 mg of direct red dye can be extracted per 1g carapace. Additionally we have demonstrated that metal ions of chromium, mercury, copper, cadmium and nickel can also be removed.

### EXAMPLE 2

### Pesticide and herbicide residues

A variety of pesticides have been demonstrated to be bound by the adsorbent material including *chloroprofan (CIPC),* technizine, simizine, diazanon, a variety of pyrethroids e.g. flumethrin and organophosphates.

### EXAMPLE 3

### Humic acids and phenolics

The adsorbent material binds a variety of polyphenolics including ferulic acid and p-coumaric acid, in addition to humic acids in peaty water.

### EXAMPLE 4

### Organic residues

The adsorbent material selectively removes the oil phase from dilute, but stable oil in water emulsions. These are of the type often generated in the waste-water streams from food processing industries or effluent from milling and cutting of metal.

### EXAMPLE 5

### Inorganic residues.

The adsorbent material binds a variety of heavy metal residues in both their cationic and anionic forms, please refer to Table 1.

### References

*Cooper* (1995) Colour in Dyehouse Effluent. Soc. Dyers and Colourists. Alden Press, Oxon. ISBN 0 901956 69 4
*Hegdahl*, *T, Gustavesen*, *F & Silness.J*.(1977) The structure and mineralization of the carapace of the Crab (Cancer pagurus) 1. The endocuticle. Zoologica Scripta Vol. 6 pp 89-99
*Hegdahl, T, Gustavsen*, *F. & Silness, J*. (1977) The structure and mineralization of the carapace of the Crab (Cancer pagurus) 2. The exocuticle. Zoologica Scripta Vol. 6. pp 101-105.

**Table 1**

| **Results of Extracted Components bound per gram Carapace** | |
|---|---|
| **Metal Ion** | **Mass bound per 1 g carapace** |
| Chromium | 66.0 mg |
| Mercury | 37.5 mg |
| Copper | 70.5 mg |
| Cadmium | 58.0 mg |
| Nickel | 65.0 mg |

| **Coloured Dye** | **Mass bound per 1 g carapace** |
|---|---|
| Specactive Red; Reactive Dye | 6.6 mg |
| Direct Red; Direct Dye | 1.7 mg |

## Claims

1. A method of treating a liquid composition to extract therefrom one or more components thereof, the method comprising contacting the liquid composition with fragmented shell, or part shell, of a crustacean, said one or more components having a binding affinity with said shell, and separating said shell from said liquid composition **characterised in that** the shell is not chemically pre-treated.

2. A method according to claim 1 wherein said fragmented shell is contained within a fluidised bed contactor.

3. A method according to either claim 1 or claim 2 wherein said shell, prior to fragmentation is cleaned to remove biological soft tissue.

4. A method according to claim 3 wherein said shell is cleaned by high pressure hosing, ultrasonic cleaning, washing with fresh water and air-drying.

5. A method according to any preceding claims wherein the shell is fragmented by means of a high shear shredder.

6. A method according to any preceding claim wherein each shell fragment is 5-25 mm².

7. A method according to claim 6 wherein each shell fragment is about 15 mm².

8. A method according to claim 5 or claim 6 wherein the shell fragments are cooled to a temperature less than -30°C.

9. A method according to claim 8 wherein the shell fragments are cooled to about -75°C.

10. A method according to either claim 8 or 9 wherein the frozen shell fragments are milled to a powder.

11. A method according to any of claims 8-10 wherein said fragments are milled by means of a high shear cryogenic mill.

12. A method according to claim 10 or claim 11 wherein the milled powder is allowed to equilibrate at room temperature in a low humidity atmosphere.

13. A method according to any one of claims 1-7 wherein shell fragments are milled to a powder at ambient temperature.

14. A method according to any one of claims 10 to 13 wherein the milled powder is sieved.

15. A method according to claim 14 wherein milled powder is sieved through a screen with a pore size of between 50µm - 5mm.

16. A method according to claim 15 wherein milled powder is sieved through a screen with a pore size of between 300 and 700µm.

17. A method of preparing shell for use in treating a liquid composition according to any preceding claim wherein the fragmented shell particles are of a uniform pore size.

18. A method according to any preceding claim wherein said crustacean is selected from the group consisting of crab, prawn, langoustine and lobster.

19. A method according to claim 18 wherein said crustacean is mature.

20. A method according to any preceding claim wherein said shell is the carapace.

21. A method according to any preceding claim further comprising the step of treating the shell particles so as to remove/extract the bound component(s).

22. A method according to claim 21 wherein the step of treating the shell particles comprises contacting the particles with a liquid of different pH from that of said liquid composition.

23. A method according to claim 21 wherein the step of treating the shell particles comprises contacting the particles with a suitable solvent.

24. A method according to any one of claims 21 to 23 further comprising the step of recycling the shell particles so as to treat further liquid compositions.

25. A method according to any one of claims 21 to 24 wherein after the extracted component(s) is/are removed/extracted from the shell particles the component(s) is/are recycled and/or suitably treated for waste disposal.

26. A method according to any preceding claim wherein said component(s) include one or more dyes, pesticides, herbicides, polyphenolics, humic acids, oils, oil phase emulsions, heavy metal residues and/or any other contaminant.

27. Use of chemically non pre-treated crustacean carapace powder for treating a liquid composition to extract therefrom one or more components.

28. A method of reforming at least one recycled component into an industrial or agricultural product using the method of Claim 1 and optionally further including any one or more of the features of Claims 2-26, the method of reforming the at least one recycled component including at least one further processing step.

## Patentansprüche

1. Verfahren zur Behandlung einer flüssigen Zusammensetzung, um daraus eine oder mehrere ihrer Komponenten zu extrahieren, wobei das Verfahren das Inkontaktbringen der flüssigen Zusammensetzung mit der fragmentierten Schale oder Teil-Schale eines Krustentieres, wobei die genannten eine oder mehrere Komponenten eine Bindungsaffinität zu dieser Schale besitzen und die Abtrennung dieser Schale aus dieser flüssigen Zusammensetzung umfasst, **dadurch gekennzeichnet, dass** die Schale nicht chemisch vorbehandelt ist.

2. Verfahren gemäß Anspruch 1, worin diese fragmentierte Schale in einem Wirbelschicht-Kontaktor enthalten ist.

3. Verfahren gemäß entweder Anspruch 1 oder Anspruch 2, worin diese Schale zum Entfernen von biologischem Weichgewebe vor der Fragmentierung gereinigt wird.

4. Verfahren gemäß Anspruch 3, worin diese Schale durch Hochdruck-Spritzen, Ultraschallreinigung, Waschen mit frischem Wasser und Lufttrocknen gereinigt wird.

5. Verfahren gemäß irgendeinem der vorangehenden Ansprüche, worin die Schale mittels eines hoch-scherenden Schredders fragmentiert wird.

6. Verfahren gemäß irgendeinem vorangehenden Anspruch, worin jedes Schalen-Fragment 5-25 mm² groß ist.

7. Verfahren gemäß Anspruch 6, worin jedes Schalen-Fragment ungefähr 15 mm² groß ist.

8. Verfahren gemäß Anspruch 5 oder Anspruch 6, worin die Schalen-Fragmente auf eine Temperatur von weniger als -30 °C gekühlt werden.

9. Verfahren gemäß Anspruch 8, worin die Schalen-Fragmente auf ungefähr -75 °C gekühlt werden.

10. Verfahren gemäß entweder Anspruch 8 oder 9, worin die gefrorenen Schalen-Fragmente zu einem Pulver zermahlen werden.

11. Verfahren gemäß irgendeinem der Ansprüche 8-10, worin diese Fragmente mittels einer hoch-scherenden Tieftemperaturmühle gemahlen werden.

12. Verfahren gemäß Anspruch 10 oder Anspruch 11, worin es dem gemahlenen Pulver gestattet wird, bei Raumtemperatur in einer Atmosphäre niedriger Feuchtigkeit ins Gleichgewicht zu kommen.

13. Verfahren gemäß irgendeinem der Ansprüche 1 - 7, worin Schalen-Fragmente bei Raumtemperatur zu einem Pulver gemahlen werden.

14. Verfahren gemäß irgendeinem der Ansprüche 10 bis 13, worin das gemahlene Pulver gesiebt wird.

15. Verfahren gemäß Anspruch 14, worin das gemahlene Pulver durch ein Sieb mit einer Porengröße von zwischen 50 µm - 5 mm gesiebt wird.

16. Verfahren gemäß Anspruch 15, worin das gemahlene Pulver durch ein Sieb mit einer Porengröße von zwischen 300 und 700 µm gesiebt wird.

17. Verfahren zur Vorbereitung von Schalen auf die Verwendung bei der Behandlung einer flüssigen Zusammensetzung gemäß irgendeinem voranstehenden Anspruch, worin die fragmentierten Schalen-Partikel von einheitlicher Porengröße sind.

18. Verfahren gemäß irgendeinem voranstehenden Anspruch, worin das genannte Krustentier ausgewählt ist aus der Gruppe bestehend aus Krabbe, Garnele, Languste und Hummer.

19. Verfahren gemäß Anspruch 18, worin dieses Krustentier voll entwickelt ist.

20. Verfahren gemäß irgendeinem voranstehenden Anspruch, worin diese Schale der Carapax ist.

21. Verfahren gemäß irgendeinem voranstehenden Anspruch, das weiterhin den Behandlungsschritt der Schalen-Partikel zum Entfernen/Extrahieren der gebundenen Komponente(n) umfasst.

22. Verfahren gemäß Anspruch 21, worin der Behandlungsschritt der Schalen-Partikel das Inkontaktbringen der Partikel mit einer Flüssigkeit umfasst, die einen anderen pH-Wert besitzt, als die genannte flüssige Zusammensetzung.

23. Verfahren gemäß Anspruch 21, worin der Behandlungsschritt der Schalen-Partikel das Inkontaktbringen der Partikel mit einem geeigneten Lösemittel umfasst.

24. Verfahren gemäß irgendeinem der Ansprüche 21 bis 23, das zur Behandlung weiterer flüssiger Zusammensetzungen weiterhin den Schritt der Rückgewinnung der Schalen-Partikel umfasst.

25. Verfahren gemäß irgendeinem der Ansprüche 21 bis 24, worin, nachdem die extrahierte(n) Komponente(n) von bzw. aus den Schalen-Partikeln entfernt/extrahiert wurde(n) die Komponente(n) zurück gewonnen wird/werden und/oder zur Abfallentsorgung geeignet behandelt wird bzw. werden.

26. Verfahren gemäß irgendeinem voranstehenden Anspruch, worin diese Komponente(n) einen oder mehrere Farbstoffe, Pestizide, Herbizide, Polyphenole, Huminsäuren, Öle, Ölphasen-Emulsionen, Schwermetall-Reste und/oder jede andere Kontamination einschließt bzw. einschließen.

27. Verwendung von chemisch nicht vorbehandeltem Krustentier-Carapax-Pulver zur Behandlung einer flüssigen Zusammensetzung, um daraus eine oder mehrere Komponente(n) zu extrahieren.

28. Verfahren zur Umformung wenigstens einer rückgewonnenen Komponente in ein industrielles oder landwirtschaftliches Produkt unter Verwendung des Verfahrens nach Anspruch 1 und optional weiterhin irgendeines oder mehrerer der Merkmale der Ansprüche 2 - 26, wobei das Umformungsverfahren für wenigstens eine rückgewonnene Komponente wenigstens einen weiteren Verfahrensschritt umfasst.

## Revendications

1. Procédé de traitement d'une composition liquide pour extraire de celle-ci un ou plusieurs composants, le procédé comprenant l'étape de mettre en contact la composition liquide avec une coquille fragmentée ou une partie de coquille d'un crustacé, ledit un ou plusieurs composants présentant une affinité de liaison avec ladite coquille, et séparer ladite coquille de ladite composition liquide, **caractérisé en ce que** la coquille n'est pas chimiquement prétraitée.

2. Procédé selon la revendication 1, **caractérisé en ce que** ladite coquille fragmentée est contenue dans un contacteur à lit fluidisé.

3. Procédé selon l'une des revendications 1 ou 2, **caractérisé en ce que** ladite coquille, avant la fragmentation, est nettoyée pour enlever le tissu tendre biologique.

4. Procédé selon la revendication 3, **caractérisé en ce que** ladite coquille est nettoyée par jet d'eau à haute pression, nettoyage à ultrason, lavage à eau douce et séchage à l'air.

5. Procédé selon l'une des revendications précédentes, **caractérisé en ce que** la coquille est fragmentée au moyen d'un découpeur à cisaillement élevé.

6. Procédé selon l'une des revendications précédentes, **caractérisé en ce que** chaque fragment de coquille est de 5 à 25 mm².

7. Procédé selon la revendication 6, **caractérisé en ce que** chaque fragment de coquille est d'environ 15 mm².

8. Procédé selon l'une des revendications 5 ou 6, **caractérisé en ce que** les fragments de coquille sont refroidis à une température inférieure à -30°C.

9. Procédé selon la revendication 8, **caractérisé en ce que** les fragments de coquille sont refroidis à environ -75°C.

10. Procédé selon l'une des revendications 8 ou 9, **caractérisé en ce que** les fragments de coquille gelés sont broyés jusqu'à obtenir une poudre.

11. Procédé selon l'une des revendications 8 à 10, **caractérisé en ce que** lesdits fragments sont broyés au moyen d'un broyeur cryogénique à degré élevé de cisaillement.

12. Procédé selon l'une des revendications 10 ou 11, **caractérisé en ce que** la poudre broyée est ensuite mise à équilibre à température ambiante, dans une atmosphère à humidité faible.

13. Procédé selon l'une des revendications 1 à 7, **caractérisé en ce que** lesdits fragments de coquille sont moulus jusqu'à obtenir une poudre à température ambiante.

14. Procédé selon l'une des revendications 10 à 13, **caractérisé en ce que** la poudre moulue est criblée.

15. Procédé selon la revendication 14, **caractérisé en ce que** la poudre moulue est criblée au travers d'un tamis avec une taille de pores entre 50 µm et 5 mm.

16. Procédé selon la revendication 15, **caractérisé en ce que** la poudre moulue est criblée au travers d'un écran avec une taille de pores entre 300 et 700µm.

17. Procédé pour préparer une coquille destinée à être utilisée pour le traitement d'une composition de liquide, selon l'une des revendications précédentes, **caractérisé en ce que** les particules de coquille fragmentées sont de taille de pore uniforme.

18. Procédé selon l'une des revendications précédentes, **caractérisé en ce que** ledit crustacé est choisi parmi le groupe consistant en crabe, crevette, langoustine et homard.

19. Procédé selon la revendication 18, **caractérisé en ce que** ledit crustacé est mature.

20. Procédé selon l'une des revendications précédentes, **caractérisé en ce que** ladite coquille est la carapace.

21. Procédé selon l'une des revendications précédentes, comprenant en outre l'étape de traitement des particules de coquille afin d'enlever/extraire le ou les composants lié(s).

22. Procédé selon la revendication 21, **caractérisé en ce que** l'étape de traitement des particules de coquille comporte la mise en contact des particules avec un liquide de pH différent de celui de ladite composition liquide.

23. Procédé selon la revendication 21, **caractérisé en ce que** l'étape de traitement des particules de coquille comporte la mise en contact des particules avec un solvant adapté.

24. Procédé selon l'une des revendications 21 à 23, comprenant en outre l'étape de recyclage des particules de coquille afin de traiter d'autres compositions.

25. Procédé selon l'une des revendications 21 à 24, **caractérisé en ce que** après que le ou les composants extrait(s) est ou ont été enlevés/extraits des particules de coquille, le ou les composants est/sont recyclé(s) et/ou traité(s) de manière adaptée pour être évacué(s) en tant que déchet.

26. Procédé selon l'une des revendications précédentes, **caractérisé en ce que** le ou lesdits composants incluent un ou plusieurs colorants, pesticides, herbicides, polyphénoliques, acides humiques, huiles, émulsions en phase d'huile, résidus métaux lourds et/ou autres contaminants.

27. Utilisation d'une carapace de crustacé chimiquement non pré-traitée, en forme de poudre, pour traiter une composition de liquide pour extraire de celle-ci un ou plusieurs composants.

28. Procédé de retraitement d'au moins un composant recyclé dans un produit industriel ou agricole en utilisant le procédé de la revendication 1, et optionnellement incluant en outre une ou plusieurs des caractéristiques des revendications 2 à 26, le procédé de retraitement du au moins un composant recyclé incluant au moins une autre étape de traitement.
